(19)

**Europäisches Patentamt**
**European Patent Office**
**Office européen des brevets**

(11) **EP 4 335 614 B1**

(12) **EUROPÄISCHE PATENTSCHRIFT**

(45) Veröffentlichungstag und Bekanntmachung des Hinweises auf die Patenterteilung:
**16.07.2025   Patentblatt 2025/29**

(21) Anmeldenummer: **23193185.8**

(22) Anmeldetag: **24.08.2023**

(51) Internationale Patentklassifikation (IPC):
**B29C 49/36** *(2006.01)*    **B29C 49/58** *(2006.01)*
**B29C 49/78** *(2006.01)*    B29C 49/06 *(2006.01)*
B29C 49/46 *(2006.01)*    B29C 49/42 *(2006.01)*
B29L 31/00 *(2006.01)*    B29C 49/12 *(2006.01)*
B29K 67/00 *(2006.01)*

(52) Gemeinsame Patentklassifikation (CPC):
**B29C 49/42845; B29C 49/783;** B29C 49/06;
B29C 49/12; B29C 2049/7832; B29C 2049/7833;
B29C 2949/0715; B29K 2067/003; B29L 2031/7158

(54) **VORRICHTUNG UND VERFAHREN ZUM UMFORMEN VON KUNSTSTOFFVORFORMLINGEN ZU KUNSTSTOFFBEHÄLTNISSEN MIT GEREGELTEM DRUCKLUFTRECYCLING**

DEVICE AND METHOD FOR REFORMING PLASTIC PREFORMS INTO PLASTIC CONTAINERS WITH CONTROLLED COMPRESSED AIR RECYCLING

DISPOSITIF ET PROCÉDÉ DE FORMAGE D'ÉBAUCHES EN PLASTIQUE EN RÉCIPIENTS EN PLASTIQUE AVEC RECYCLAGE CONTRÔLÉ DE L'AIR COMPRIMÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **08.09.2022   DE 102022122879**

(43) Veröffentlichungstag der Anmeldung:
**13.03.2024   Patentblatt 2024/11**

(73) Patentinhaber: **Krones AG**
**93073 Neutraubling (DE)**

(72) Erfinder:
• **Hengl, Benedikt**
**93073 Neutraubling (DE)**

• **Vogler, Daniel**
**93073 Neutraubling (DE)**
• **Kulzer, Markus**
**93073 Neutraubling (DE)**
• **Meier, Dominik**
**93073 Neutraubling (DE)**

(74) Vertreter: **Hannke Bittner & Partner mbB**
**Regensburg**
**Prüfeninger Straße 1**
**93049 Regensburg (DE)**

(56) Entgegenhaltungen:
DE-A1- 102011 110 962    US-A1- 2004 173 949
US-A1- 2010 171 243    US-A1- 2016 136 868

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Vorrichtung und ein Verfahren zum Umformen von Kunststoffvorformlingen zu Kunststoffbehältnissen. Im Bereich der getränkeherstellenden Industrie ist es seit langem bekannt, dass erwärmte Kunststoffvorformlinge zu Kunststoffbehältnissen umgeformt und insbesondere expandiert werden. Hierzu werden die Kunststoffvorformlinge innerhalb von Blasformen mit einem fließfähigen Medium, meistens Druckluft (aber teilweise auch mittels Flüssigkeiten) zu den Behältnissen expandiert. Typische Maschinen, die diese Prozesse durchführen sind Streckblasmaschinen.

Im Stand der Technik werden bei Streckblasmaschinen zum Formen von Behältnissen verschiedene Druckniveaus verwendet, welche mithilfe einer Ventilanordnung und insbesondere eines Ventilblocks in Strömungsverbindung mit dem Behältnis gebracht werden. Derartigen Vorrichtungen und Verfahren sind dabei beispielsweise auch aus US 2016/136868 A1, DE 10 2011 110962 A1, US 2010/171243 A1 oder US 2004/173949 A1 bekannt. Aus dem Stand der Technik sind Prozesse mit zwei oder drei Druckstufen im Druckaufbau bekannt. Im internen Stand der Technik der Anmelderin werden jedoch auch schon Konfigurationen mit vier Druckstufen erprobt. Als unter Druck stehendes Medium wird zumeist Luft verwendet, es können jedoch auch andere gasförmige Fluide und auch Flüssigkeiten wie etwa das abzufüllende Getränk verwendet werden.

Eine Druckaufbauphase weist teilweise vier Druckstufen auf. Die einzelnen Druckstufen werden im Stand der Technik vom Maschinenbediener eingestellt. Diese, beispielsweise vier, Druckstufen werden aufsteigend nacheinander über die an einer Ventileinheit wie einem Ventilblock befindlichen Ventile auf das Behältnis aufgeschaltet.

Nachdem der höchste Druck für eine bestimmte Zeit gehalten wird, folgt die Recyclingphase des Prozesses. Im Folgenden wird unter der Recyclingphase diejenige Phase verstanden, bei der das fließfähige Medium (insbesondere von dem zu expandierenden Behältnis) wieder in die einzelnen Druckreservoirs (bei denen es sich beispielsweise um Ringkanäle handeln kann) zurückgeführt wird.

Bei der Recyclingphase werden die Ventile der einzelnen Druckstufen vorteilhaft in absteigender Reihenfolge nacheinander geöffnet. Der in dem Behältnis herrschende Druck wird auf das jeweilige Druckniveau der einzelnen Stufen (und insbesondere in die jeweiligen Druckreservoirs) entspannt, wobei Luftmasse von dem Behältnis in ein Druckreservoir strömt.

Eine Ventilöffnungszeit der Ventile während der Recyclingphase bestimmt die Luftmasse, welche recycelt wird. Dabei wird ein Druckgefälle zwischen dem Behältnis und dem Druckreservoir der einzelnen Stufen vorausgesetzt. Sind die einzelnen Ventile so lange geöffnet, dass sich zwischen dem Behältnis und dem jeweiligen Druckreservoir ein kompletter Druckausgleich einstellt, so führt eine längere Ventilöffnungszeit nicht zu einer höheren recycelten Masse. Im Stand der Technik werden die Ventilöffnungszeiten derart geregelt, dass der von dem Bediener eingestellte Druck in dem Druckreservoir möglichst erreicht wird.

Die Startzeitpunkte der einzelnen Recyclingzyklen werden im Stand der Technik ausgehend vom Entlast-Zeitpunkt eines Behältnisses, welcher für die jeweilige Maschine charakteristisch ist, anhand der von einer Regeleinrichtung berechneten Ventilöffnungszeiten gesetzt.

Eine Regelabweichung, welche die Regeleinrichtung detektiert, ist die Differenz zwischen einem Soll- und Ist-Druck eines Druckreservoirs der jeweiligen Druckstufe. Im internen Stand der Technik der Anmelderin werden zum Teil Parameter der Blaskurve von einem Bediener eingestellt und einige werden von der Maschine selbst bestimmt.

Von besonderer Bedeutung für den Druckluftverbrauch der jeweiligen Anlage ist der Druck in dem Behältnis zum jeweiligen Entlast-Zeitpunkt, da sich der Druckverbrauch pro Behältnis aus dem Entlast-Druck, dem Behältervolumen und dem Totraum der Station berechnet.

Ein Nachteil der momentanen Vorgehensweise ist die vorgesehene Benutzereingabe der Zwischenblasdrücke durch den Benutzer, denn dadurch kann eine Recyclingregeleinheit bestenfalls für diese Eingabe ein Optimum finden. Dies bedeutet, dass die jeweiligen Reservoirdrücke zwar erreicht werden, ein Entlast-Druck aber weit über dem kleinstmöglichen Entlast-Druck liegt. Der kleinstmögliche Entlast-Druck entspricht dem Druck der niedrigsten Druckstufe im Druckaufbau.

Ein weiterer Nachteil sind die von den Ventilöffnungszeiten abhängigen Recyclingstartzeitpunkte. Speist man zu einem ungünstigen Zeitpunkt in das Druckreservoir zurück, beispiels- weise wenn der Reservoirdruck gerade am höchsten ist, so verringert sich das Recyclingpotenzial. Ein zusätzlicher Nachteil der aktuellen Vorgehensweise ist, dass die Charakteristik der Luftentnahme aus dem Reservoir im aufsteigenden Ast (Druckaufbauphase) beim Recycling nicht berücksichtigt wird und somit Recyclingpotenzial ungenutzt bleibt.

Der vorliegenden Erfindung liegt daher die Aufgabe zugrunde, derartige Vorrichtungen und Verfahren energieeffizienter zu gestalten. Insbesondere soll dabei die durch ein Druckluftrecycling erreichbare Effizienzsteigerung verbessert werden. Dies wird erfindungsgemäß durch Verfahren und Vorrichtungen nach den unabhängigen Patentansprüchen erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen wird ein Kunststoffvorformling (und werden bevorzugt mehrere Kunststoffvorformlinge) durch Beaufschlagung mit einem fließfähigen und insbesondere gasförmigen Medium und insbesondere Luft zu dem Kunststoffbehältnis expandiert, wobei das fließfähige Medium unter einem ersten Druck in einem ersten Druckreservoir gespeichert wird und unter einem zweiten Druck, der höher ist als der erste Druck in einem zweiten Druckreservoir gespeichert wird und wobei der Kunststoffvorformling über eine Strömungsverbindung zwischen dem ersten Druckreservoir und den Kunststoffvorformling mit einem ersten Blasdruck beaufschlagt wird und über eine Strömungsverbindung zwischen dem zweiten Druckreservoir und den Kunststoffvorformling mit dem zweiten Blasdruck beaufschlagt wird. Bevorzugt erfolgt dabei die Beaufschlagung mit dem zweiten Blasdruck nach der Beaufschlagung mit den ersten Blasdruck.

Weiterhin wird wenigstens zeitweise fließfähiges Medium (insbesondere Druckluft) (insbesondere von dem Behältnis) in das erste Druckreservoir zurückgeführt, wobei bevorzugt erste für die Beaufschlagung der Kunststoffvorformlinge mit dem fließfähigen Medium charakteristische Werte vorgegeben werden.

Bei einer ersten erfindungsgemäßen Ausführungsform werden unter Berücksichtigung der ersten Werte zweite Werte ermittelt, welche für einen Zeitpunkt oder Zeitraum (und insbesondere einen Startzeitpunkt) des Zurückführens des fließfähigen Mediums in das erste Druckreservoir charakteristisch sind.

Bei einem zweiten erfindungsgemäßen Verfahren wird ein Zeitpunkt und/oder Zeitraum der Rückführung des fließfähigen Mediums (und insbesondere ein Startzeitpunkt) in das Reservoir in Abhängigkeit von einem Zeitpunkt und/oder Zeitraum für die Beaufschlagung des Kunststoffvorformlings mit dem fließfähigen Medium gewählt und/oder ermittelt. Bei einem weiteren erfindungsgemäßen Verfahren wird wenigstens ein Zeitpunkt und/oder Zeitraum (und insbesondere ein Startzeitpunkt für eine Rückführung in das erste Druckreservoir) in Abhängigkeit von einem Zeitpunkt und/oder Zeitraum (und insbesondere einem Startzeit- punkt bestimmt, der für die Beaufschlagung des Kunststoffvorformlings mit Druck aus einem Druckreservoir charakteristisch ist.

Es wäre weiterhin auch denkbar, die hier beschriebenen erfindungsgemäßen Verfahren kumulativ anzuwenden. Auch wäre es möglich, für unterschiedliche Druckstufen und/oder Druckreservoirs unterschiedliche Verfahren anzuwenden, etwa für einen Zwischendruck Pi das erste der oben beschriebenen Verfahren und für einen Zwischendruck Pi+ das zweite Verfahren.

Bevorzugt werden wenigstens zwei der Startzeitpunkte bestimmt. Besonders bevorzugt werden die Startzeitpunkte für die Rückführung des fließfähigen Mediums in wenigstens ein Druckreservoir bestimmt, welches zur Aufnahme eines Zwischenblasdrucks dient.

Besonders bevorzugt werden die genannten ersten Werte wenigstens teilweise und bevorzugt vollständig durch einen Benutzer vorgegeben. Es wäre jedoch auch möglich, dass diese ersten genannten Werte durch eine Maschinensteuerung berechnet werden. Diese Werte können dabei beispielsweise in Abhängigkeit von dem herzustellenden Behältnis ermittelt werden. Auch wäre es denkbar, dass diese Werte in Abhängigkeit von dem zu expandierenden Kunststoffvorformling bestimmt und/oder ermittelt werden.

Besonders bevorzugt wird der Kunststoffvorformling entlang eines vorgegebenen Transportpfads transportiert, während er mit dem fließfähigen Medium beaufschlagt wird. Besonders bevorzugt wird eine Vielzahl von Kunststoffvorformlingen wenigstens teilweise zeitgleich (bzw. in wenigstens teilweise überlappenden Zeiträumen) mit dem fließfähigen Medium beaufschlagt, um so expandiert zu werden.

Durch die beiden erfindungsgemäßen Vorgehensweisen kann eine Effizienzsteigerung hinsichtlich der Blasluft erreicht werden. Insbesondere können auf diese Weise die (Start)zeitpunkte, zu denen das Rückführen von Luft, im Folgenden als Recycling bezeichnet, durchgeführt werden, bestimmt werden.

Bei einem bevorzugten Verfahren sind die ersten Werte aus einer Gruppe von Werten ausgewählt, welche eine Größe eines ersten Drucks (insbesondere eines Vorblasdrucks P1), eine Größe des zweiten Drucks (insbesondere eines ersten Zwischenblasdrucks Pi), der bevorzugt höher ist als der Vorblasdruck), eine Größe eines dritten Drucks (insbesondere eines zweiten Zwischenblasdrucks Pi+), der bevorzugt höher ist als der erste Zwischenblasdruck Pi), eine größe eines vierten Drucks (insbesondere eines Fertigblasdrucks P2) einen Zeitpunkt für den Beginn der Beaufschlagung mit dem ersten Druck, einen Zeitpunkt für den Beginn der Beaufschlagung mit dem zweiten Druck, einen Zeitpunkt für den Beginn einer Beaufschlagung mit dem dritten Druck, einen Zeitpunkt für den Beginn einer Beaufschlagung mit dem vierten Druck, eine Zeitdauer der Beaufschlagung mit dem ersten Druck, eine Zeitdauer der Beaufschlagung mit dem zweiten Druck, eine Zeitdauer der Beaufschlagung mit dem dritten Druck, eine Zeitdauer der Beaufschlagung mit dem vierten Druck, einen Zeit- punkt für die Beendigung der Beaufschlagung mit dem ersten Druck, einen Zeitpunkt für die Beendigung der Beaufschlagung mit dem zweiten Druck, einen Zeitpunkt der Beendigung mit der Beaufschlagung mit dem dritten Druck, einen Zeitpunkt der Beendigung mit der Beaufschlagung mit dem vierten Druck, den Zeitpunkt des Beginns einer Entlastung von (Rest)druck in die Umgebung (Exhaust) und dergleichen enthält.

Besonders bevorzugt werden diese Zeitpunkte über die Schaltzeitpunkte von Ventilen gesteuert, welche an der Umformungsstation und bevorzugt jeweils jeder Umformungsstation einer Vielzahl von Umformungsstationen angeordnet sind. Dabei können die einzelnen Zeitdauern oder auch die Zeitpunkte mittels entsprechender Ventile bzw. deren Schaltzeitpunkte gesteuert werden. Dabei können auch Offsets hinzugefügt werden, welche eine Reaktionszeit der Ventile berücksichtigen.

Weiterhin können auch Werte gesteuert werden, wie etwa ein Druckniveau innerhalb der Druckreservoirs.

Besonders bevorzugt ist wenigstens ein Druckreservoir und bevorzugt sind mehrere Druckreservoirs als Ringkanäle ausgeführt. Bevorzugt sind die Druckreservoirs an einem beweglichen Träger angeordnet, an dem bevorzugt auch die Umformungsstationen angeordnet.

Bei einem weiteren bevorzugten Verfahren werden die Kunststoffvorformlinge entlang eines vorgegebenen (insbesondere kreisförmigen) Transportpfads transportiert und bevorzugt erfolgt die Expansion während dieses Transports. Bevorzugt werden die Kunststoffvorformlinge in Blasformen eingebracht und anschließend mit dem fließfähigen Medium beaufschlagt. Dabei ist es möglich, dass die Blasformen geöffnet werden, die Kunststoffvorformlinge in diese eingesetzt werden und alsdann die Blasformen wieder geschlossen werden. Besonders bevorzugt werden die Kunststoffvorformlinge in ihrer Längsrichtung gedehnt. Dies geschieht besonders bevorzugt, dadurch, dass eine Reckstange in das Innere der Kunststoffvorformlinge eingeführt wird. Besonders bevorzugt erfolgt dieses Dehnen der Kunststoffvorformlinge in ihrer Reckrichtung bzw. in ihrer Längsrichtung wenigstens teilweise zeitgleich mit der Beaufschlagung mit unterschiedlichen Drücken.

Besonders bevorzugt wird auch die Bewegung der Reckstange unter Berücksichtigung wenigstens eines Startzeitpunkts für die Druckbeaufschlagung des Kunststoffvorformlings gesteuert. Auf diese Weise kann der Umformungsprozess noch weiter optimiert werden.

Besonders bevorzugt wird der Kunststoffvorformling und werden bevorzugt die Kunststoffvorformlinge zu seiner bzw. ihrer Expansion mit wenigstens drei und bevorzugt mit wenigstens vier unterschiedlichen Drücken bzw. Druckstufen beaufschlagt. Besonders bevorzugt erfolgt ein Recycling oder ein Rückführen des gasförmigen Mediums in wenigstens zwei Druckreservoirs, bevorzugt in wenigstens drei Druckreservoirs.

Besonders bevorzugt wird ein Expansionsdruck vor und/oder während der Beaufschlagung des Kunststoffvorformlings und/oder ein Recyclingdruck während der Rückführung des fließfähigen Mediums in ein Druckreservoir ermittelt. Besonders bevorzugt wird wenigstens zeitweise und bevorzugt kontinuierlich ein Druck des gasförmigen Mediums innerhalb des Behältnisses ermittelt.

Besonders bevorzugt wird wenigstens zeitweise und bevorzugt kontinuierlich ein Druck des fließfähigen Mediums innerhalb wenigstens eines Druckreservoirs, bevorzugt innerhalb mehrerer Druckreservoirs und bevorzugt innerhalb aller Druckreservoirs bestimmt. Besonders bevorzugt dienen auch diese Drücke zur Steuerung der jeweiligen Zeitpunkte bzw. Zeiträume für die Beaufschlagung der Kunststoffvorformlinge mit dem fließfähigen Medium und/oder für die Rückführung des fließfähigen Mediums (d.h. insbesondere des Recyclings) in das oder mehrere Druckreservoirs.

Bevorzugt ist ein erster Druck bzw. eine erste Druckstufe geringer als 12bar, bevorzugt geringer als 10bar, bevorzugt geringer als 8bar und besonders bevorzugt geringer als 6 bar.

Bevorzugt ist ein erster Druck bzw. eine erste Druckstufe größer als 2bar, bevorzugt größer als 3bar, und besonders bevorzugt größer als 4bar.

Der hier beschriebenen Erfindung bzw. dem hier beschriebenen Verfahren liegen unterschiedliche Ansätze zur Optimierung des Druckluftverbrauchs zugrunde.

Bei einem Verfahren werden die Startzeitpunkte der jeweiligen Recyclingäste, d. h. die Zeitpunkte, zu denen in den einzelnen Druckreservoirs recycelt wird, in Abhängigkeit von den Startzeitpunkten der jeweiligen Druckstufe in der Druckaufbauphase berechnet. So ist es beispielsweise möglich, dass ein Startzeitpunkt für einen Druckaufbau und ein Startzeitpunkt für das Recyceln in Abhängigkeit voneinander bestimmt und insbesondere aufeinander synchronisiert werden. Auf diese Weise werden eine zeitgleiche Abnahme und Zufuhr aus dem Druckreservoir bzw. in das Druckreservoir erreicht. Bevorzugt gilt für die Startzeit der Rück-führung oder des Recyclings in einem bestimmten Druckniveau die folgende Beziehung:

$$\text{Startzeit Recycling Px} = \text{Startzeit Druckaufbau Px} + n \times A.$$

Der Faktor A berechnet sich aus 3600 / die Stationsleistung [b/h/c] (bottles per hour per cavity) und / die Anzahl der Stationen. Die Variable n ist abhängig von unterschiedlichen Qualitätsparametern des Behältnisses, beispielsweise einer Druckhaltezeit der höchsten Stufe und ist somit auch abhängig von dem Kundenobjekt. Die Variable n wird bevorzugt in Abhängigkeit dieser Bedienereingaben berechnet. Die Variable n ist dabei ein ganzzahliges Vielfaches (1, 2, 3, ...).

Bei einem weiteren Verfahren wird die Differenz der Druckniveaus, welche sich für die jeweilige Druckstufe während des Druckaufbaus und des Recyclings ergeben geregelt und insbesondere auf ein Minimum geregelt. Zu diesem Zweck werden der Druckaufbau und das Recycling bzw. die dort auftretenden Drücke gemessen. Als Stellgröße für diese Regelung wird bevorzugt eine Ventilöffnungszeit der einzelnen Zwischenblasdruckstufen insbesondere während der Druckaufbauphase verwendet.

Die Startdruckniveaus können vorgegeben werden, beispielsweise von einem Maschinenbediener vorgegeben werden, sie können jedoch auch von einer Maschinensteuerung vorgegeben werden oder aber mittels einer künstlichen Intelligenz berechnet oder angepasst wer- den.

Bei einem bevorzugten Verfahren werden diese Startdruckniveaus durch ein - bevorzugt automatisiertes - Berechnungsverfahren vorbelegt bzw. vorgegeben. Anschließend erfolgt bevorzugt eine Deaktivierung des Nachspeisens von Frischluft. Die Druckreservoirs können ausschließlich durch Recyclingluft befüllt werden. Die Druckniveaus in den Druckreservoirs stellen sich bevorzugt aufgrund der Gegebenheiten des physikalischen Systems ein.

Bevorzugt wird für wenigstens ein Druckreservoir die Zuführung von Frischluft wenigstens zeitweise unterbunden, insbesondere während eines Normalbetriebs der Vorrichtung.

Das oben beschriebene Vorgehen erfolgt bevorzugt zunächst einzeln für jede einzelne Druckstufe, und besonders bevorzugt beginnend von dem höchsten Zwischenblasdruckniveau bis zum niedrigsten Zwischenblasdruckniveau. Anschließend erfolgen bevorzugt, so- lange Iterationen dieser Vorgehensweise, bis sich die Drücke in den Druckreservoirs über eine gewisse Iterationszahl nicht mehr signifikant verändern.

Bevorzugt erfolgt die Rückführung des fließfähigen Mediums zwischen mehreren Umformungsstationen und dem jeweiligen Druckreservoir und bevorzugt zwischen allen Umformungsstationen und dem jeweiligen Druckreservoir (und bevorzugt mehreren Druckreservoirs).

Dabei ist bevorzugt die Rückführung zwischen den einzelnen Stationen zeitlich versetzt.

Besonders bevorzugt wird unter Berücksichtigung eines Expansionsdrucks (d.h. des Drucks bei der Beaufschlagung des Kunststoffvorformlings) und des Recyclingdrucks (d.h. des Drucks, der zum Startzeitpunkt der Rückführung vorliegt) ein Wert ermittelt und insbesondere unter Berücksichtigung des Expansionsdrucks und das Recyclingdrucks ein Vergleichs- wert ermittelt und besonders bevorzugt dieser zweite Wert (insbesondere ein Startzeitpunkt für das Recycling bzw. die Rückführung des fließfähigen Mediums) unter Berücksichtigung dieses Vergleichswerts ermittelt. Dabei ist es möglich, diesen Vergleichswert zu messen, insbesondere mittels zwei oder mehreren Sensoreinrichtungen, der Vergleichswert kann jedoch auch aus einer Blaskurve ermittelt werden. Dieser Vergleichswert kann als Regelgröße für einen Regler, welcher den Startzeitpunkt für die Rückführung des fließfähigen Mediums regelt, verwendet werden.

Bei einem bevorzugten Verfahren ist der Vergleichswert eine Differenz und/oder ein Quotient des Expansionsdrucks und des Recyclingdrucks und bevorzugt wird der zweite Wert derart geregelt, dass dieser Vergleichswert minimal wird. So kann beispielsweise eine Differenz aus dem Expansionsdruck und dem Recyclingdruck ermittelt werden und dieser (insbesondere mittels Änderung des Startzeitpunkts für das Recycling) auf ein Minimum geregelt werden.

Das Gleiche wäre auch mit einem Quotienten möglich. Auch kann in die Berechnung ein bestimmter Faktor eingestellt werden, der beispielsweise durch einen Benutzer bestimmt wird. So ist es möglich, dass die Regelung berücksichtigt, ob dieser Vergleichswert einen bestimmten Grenzwert unterschreitet oder nicht. Entsprechend kann eine Anpassung erfolgen.

Bei einem bevorzugten Verfahren wird zur Regelung wenigstens eine Ventilöffnungszeit verändert und bevorzugt werden mehrere Ventilöffnungszeiten verändert. Besonders bevorzugt wird wenigstens eine Ventilöffnungszeit eines Ventils verändert, welches eine Zwischendruckstufe (Pi und/oder Pi+) steuert. Besonders bevorzugt werden mehrere Ventilöffnungszeiten verändert und insbesondere Ventilöffnungszeiten solcher Ventile, welche für die Zuführung unterschiedlicher Zwischenblasdruckstufen zuständig sind. Bei einem weiteren bevorzugten Verfahren erfolgt die Regelung bzw. die Einstellung auf ein bestimmtes Minimum der Druckdifferenzen iterativ.

Besonders bevorzugt wird das Verfahren für mehrere Druckstufen und/oder mehrere Druckreservoirs durchgeführt und besonders bevorzugt wird dieses Verfahren zunächst für eine höhere Druckstufe und anschließend für eine niedrigere Druckstufe durchgeführt.

Bei einem weiteren vorteilhaften Verfahren wird wenigstens ein Zeitpunkt und/oder Zeitraum für eine Rückführung in das erste Druckreservoir in Abhängigkeit von einem Zeitpunkt und/oder Zeitraum bestimmt, der für die Beaufschlagung der Kunststoffvorformlinge mit Druck aus dem ersten Druckreservoir charakteristisch ist.

Desgleichen ist es auch möglich, einen Zeitpunkt und/oder Zeitraum für eine Rückführung in das zweite Druckreservoir in Abhängigkeit von einem Zeitpunkt und/oder Zeitraum zu bestimmen, der für die Beaufschlagung des Kunststoffvorformlings mit Druck aus dem zweiten Druckreservoir charakteristisch ist.

Bei einem weiteren bevorzugten Verfahren wird zur Bestimmung des Zeitpunkts und/oder Zeitraums für die Rückführung in das erste Druckreservoir wenigstens ein Parameter berücksichtigt wird, der für das zu expandierende Behältnis und/oder für eine Zeitdauer der Beaufschlagung mit einem weiteren Druckniveau charakteristisch ist.

Insbesondere werden die Startzeitpunkte für eine Rückführung in das erste Druckreservoir und/oder in das zweite Druckreservoir in dieser genannten Weise bestimmt. Alternativ zu einer Bestimmung des jeweiligen Zeitpunkts wäre es auch möglich, den Zeitpunkt mittelbar zu bestimmen, beispielsweise über eine Position der Umformungsstation entlang ihres Transportpfads. Wie oben erwähnt, werden die Umformungsstationen bevorzugt an einem drehbaren Träger wie einem Blasrad transportiert. So wäre es möglich, mit der Rückführung des fließfähigen Mediums in das jeweilige Druckreservoir, bei einer vorgegebenen Position der Umformungsstation entlang des Transportpfads zu beginnen.

So wäre es beispielsweise möglich, dass mit der Druckbeaufschlagung durch das erste Druckreservoir begonnen wird, wenn die Umformungsstation in einer vorgegebenen GradStellung, beispielsweise in einer 40° Stellung angeordnet ist und entsprechend mit der Rückführung zu beginnen, wenn die Umformungsstation in einer anderen Grad-Position, etwa einer 150° Position angekommen ist.

Bei einem bevorzugten Verfahren erfolgt die Bestimmung des Zeitpunkts, insbesondere eines Startzeitpunkts und/oder des Zeitraums für die Rückführung in das erste Druckreservoir wenigstens unter Berücksichtigung eines Parameters, der für das zu expandierenden Behältnis und/oder für eine Zeitdauer der Beaufschlagung mit einem weiteren Druckniveau charakteristisch ist. So ist es möglich, dass zur Bestimmung der jeweiligen Startzeitpunkte auch die Zeiten und/oder Druckdauern der anderen Druckniveaus berücksichtigt werden.

Daneben können auch Zeitdauern einer Beaufschlagung mit einem ersten Druck (P1-Druck) einem Zwischendrucks (PI) oder einem Fertigblasdrucks (P2) berücksichtigt werden.

Bei einem weiteren bevorzugten Verfahren wird wenigstens ein Zeitpunkt und/oder Zeitraum für eine Rückführung in das zweite Druckreservoir auch in Abhängigkeit von einem Zeitpunkt oder Zeitraum (insbesondere einem Startzeitpunkt) bestimmt, der für die Beaufschlagung des Kunststoffvorformlings mit Druck aus dem zweiten Druckreservoir charakteristisch ist. Insbesondere wird der Startzeitpunkt für die Rückführung des fließfähigen Mediums in Abhängigkeit von dem Startzeitpunkt für die Beaufschlagung des Kunststoffvorformlings mit diesem Druck ermittelt.

Bei einem weiteren bevorzugten Verfahren wird der Kunststoffvorformling zu einer Expansion mit wenigstens drei und bevorzugt mit wenigstens vier unterschiedlichen Druckstufen beaufschlagt. Besonders bevorzugt nimmt dabei die Beaufschlagung mit dem höchsten Druckniveau den größten Zeitraum in Anspruch.

Bei einem weiteren bevorzugten Verfahren wird zur Bestimmung eines Zeitpunkts und/oder Zeitraums für die Rückführung in das erste Druckreservoir wenigstens ein Parameter berücksichtigt, der aus einer Gruppe von Parametern ausgewählt ist, welche für eine Anzahl der Umformungsstationen oder eine Leistung der Umformungsstationen charakteristisch sind.

Bei einem weiteren bevorzugten Verfahren werden die Ventilöffnungszeiten für eine Beaufschlagung des Kunststoffvorformlings mit fließfähigem Medium aus wenigstens einem Druckreservoir in Abhängigkeit zu den Ventilöffnungszeiten für die Rückführung des fließfähigen Mediums in dieses Druckreservoir gesetzt (und/oder sie stehen in einer Abhängigkeit zu diesen) und entsprechen insbesondere diesen. Besonders bevorzugt sind diese Ventilöffnungszeiten aufeinander angepasst oder weichen voneinander um ein Verhältnis und/oder eine Differenz ab, welches geringer ist als 20 %, bevorzugt geringer als 15 %, bevorzugt geringer als 10 % und bevorzugt geringer als 5 %. Bei einem bevorzugten Verfahren werden die jeweiligen Zeitdauern gesteuert und insbesondere geregelt. Es wäre jedoch auch möglich, dass diese Zeitdauern ebenfalls vorgegeben werden.

Bei einem weiteren bevorzugten Verfahren wird zur Regelung der Vorrichtung wenigstens eine Ventilöffnungszeit und/oder wenigstens eine Beaufschlagungsdauer verändert.

Die vorliegende Erfindung ist weiterhin auf eine Vorrichtung zum Umformen von Kunststoffvorformlingen zu Kunststoffbehältnissen gerichtet, welche wenigstens eine Umformungsstation aufweist, welche eine Beaufschlagungseinrichtung aufweist, welche dazu geeignet und bestimmt ist, einen Kunststoffvorformling durch Beaufschlagung mit einem fließfähigen Medium zu dem Kunststoffbehältnis zu expandieren. Weiterhin weist die Vorrichtung ein erstes Druckreservoir zur Speicherung des fließfähigen Mediums unter einem ersten Druck sowie ein zweites Druckreservoir zur Speicherung des fließfähigen Mediums unter einem zweiten Druck, der höher ist als der erste Druck, auf, und es ist eine erste Strömungsverbindung zwischen dem Druckreservoir und dem Kunststoffvorformling vorgesehen (und/oder herstellbar), um den Kunststoffvorformling über diese Strömungsverbindung zwischen dem ersten Druckreservoir und dem Kunststoffvorformling mit dem ersten Blasdruck zu beaufschlagen.

Weiterhin ist auch eine zweite Strömungsverbindung zwischen dem zweiten Druckreservoir und dem Kunststoffvorformling vorgesehen (und/oder herstellbar), um den Kunststoffvorformling über diese zweite Strömungsverbindung zwischen dem zweiten Druckreservoir und dem Kunststoffvorformling mit einem zweiten Blasdruck zu beaufschlagen. Weiterhin ist wenigstens zeitweise das fließfähige Medium (insbesondere Druckluft) von dem Behältnis in das erste Druckreservoir rückführbar und es ist bevorzugt eine Steuerungseinrichtung vorgesehen, welche erste für die Beaufschlagung der Kunststoffvorformlinge mit dem fließfähigen Medium charakteristische Werte vorgibt.

Bei einer ersten erfindungsgemäßen Ausgestaltung ermittelt eine Prozessoreinrichtung unter Berücksichtigung der ersten Werte zweite Werte, welche für einen Zeitpunkt oder Zeitraum und insbesondere einen Startzeitpunkt eines Zurückführens des fließfähigen Mediums in das erste Druckreservoir charakteristisch sind.

Bei einer zweiten erfindungsgemäßen Ausgestaltung ist wenigstens ein Zeitpunkt und/oder Zeitraum (und insbesondere ein Startzeitpunkt) für eine Rückführung (von fließfähigem Medium) in das erste Druckreservoir in Abhängigkeit von einem Zeitpunkt und/oder Zeitraum bestimmbar, der für die Beaufschlagung des Kunststoffvorformlings mit Druck aus einem Druckreservoir charakteristisch ist.

Bei beiden Ausgestaltungen wird daher vorgeschlagen, dass ein Parameter für die Rückführung des Drucks und insbesondere ein Startzeitpunkt einstellbar ist. Dabei werden in beiden Fällen diese Zeiten oder Zeiträume und insbesondere ein Startzeitpunkt oder mehrere Startzeitpunkte auf Basis wenigstens eines oder derjenigen Werte bestimmt, welche für die Beaufschlagung der Kunststoffvorformlinge charakteristisch sind.

Besonders bevorzugt sind die ersten charakteristischen Werte aus einer Gruppe ausgewählt, welche ein erstes Druckniveau (P1), ein zweites Druckniveau, insbesondere ein erstes Zwischenblasdruckniveau (Pi), ein drittes Druckniveau, insbesondere ein zweites Zwischenblasdruckniveau (Pi+ ), ein viertes Druckniveau, insbesondere Fertigblasdruckniveau (P2), einen Zeitpunkt und/oder Zeitraum für die Beaufschlagung mit dem ersten Druckniveau, einen Zeitpunkt oder Zeitraum für die Beaufschlagung mit dem zweiten Druckniveau, einen Zeit- punkt oder Zeitraum für die Beaufschlagung mit dem dritten Druckniveau und einen Zeit- punkt oder Zeitraum für die Beaufschlagung mit dem vierten Druckniveau (Fertigblasdruck) enthält. Es wird darauf hingewiesen, dass im Rahmen der vorliegenden Anmeldung die Be- griffe Druck und Druckniveau synonym verwendet werden.

Besonders bevorzugt weist die Vorrichtung eine Vielzahl von derartigen Umformungsstation auf, welche zum Umformen der Kunststoffvorformlinge in Kunststoffbehältnisse dienen. Besonders bevorzugt weisen die Umformungsstationen jeweils Blasdüsen auf, welche an die Kunststoffvorformlinge anlegbar sind, um diese so mit dem Blasdruck zu beaufschlagen.

Damit bilden diese Blasdüsen bevorzugt Bestandteile der oben erwähnte Beaufschlagungseinrichtungen. Bei einer weiteren bevorzugten Ausführungsform weisen die Umformungsstationen jeweils Reckstangen auf, welche in die Kunststoffvorformlinge einführbar sind, um diese in ihrer Längsrichtung zu dehnen.

Bei einer weiteren vorteilhaften Ausführungsform weisen die Umformungsstationen jeweils Steuerungseinrichtungen auf, welche die Beaufschlagung der Kunststoffvorformlinge mit den unterschiedlichen Drücken bzw. Druckniveaus steuern. So können Ventilanordnungen wie beispielsweise Ventilblöcke vorgesehen sein, welche die Beaufschlagung der Kunststoffvorformlinge mit unterschiedlichen Druckniveaus steuern. Besonders bevorzugt weist wenigstens eine dieser Ventilanordnungen und weisen bevorzugt die Ventilanordnungen wenigstens ein Ventil, insbesondere ein steuerbares Ventil und insbesondere ein Proportionalventil auf.

Bei einer weiteren vorteilhaften Ausführungsform weist die Vorrichtung wenigstens eine Sensoreinrichtung auf, welche dazu geeignet und bestimmt ist, einen Druck des fließfähigen Mediums in wenigstens einem Druckreservoir und/oder in dem Behältnis zu erfassen. Besonders bevorzugt ist beiden Druckreservoirs und gegebenenfalls die mehreren Druckreservoirs jeweils wenigstens eine derartige Sensoreinrichtung zugeordnet. Daneben ist auch wenigstens einer und sind bevorzugt mehreren Umformungsstationen jeweils wenigstens eine Sensoreinrichtung zugeordnet, welche zur Erfassung eines Drucks in dem zu expandierenden Behältnis geeignet und bestimmt sind.

Bei einer weiteren vorteilhaften Ausführungsform weist die Umformungsstation eine Ventilanordnung auf, welche die Beaufschlagung des Kunststoffvorformlings mit wenigstens drei und bevorzugt mit wenigstens vier unterschiedlichen Druckniveaus ermöglicht. Dabei kann diese Steuerungseinrichtung bzw. die Ventilanordnung auch dazu geeignet und bestimmt sein, die Rückführung des fließfähigen Mediums von dem Kunststoffvorformling in wenigstens ein Druckreservoir und bevorzugt in mehrere Druckreservoirs zu steuern. Bevorzugt ist das gleiche Ventil, welches der Druckbeaufschlagung des Behältnisses mit einer bestimmten Druckstufe dient auch dazu geeignet und bestimmt, die Rückführung des fließfähigen Medi- ums von dem Behältnis in das entsprechende Druckreservoir zu bewirken.

Bei einer weiteren vorteilhaften Ausführungsform weist die Vorrichtung eine Vergleichseinrichtung auf, welche einen Expansionsdruck und/oder einen Druck, mit dem die Kunststoffvorformlinge beaufschlagt werden und einen Recyclingdruck (insbesondere einen Druck, mit dem das fließfähige Medium zurück in die Druckreservoirs geführt wird) miteinander vergleicht und besonders bevorzugt wenigstens einen Wert ausgibt, der für diesen Vergleich charakteristisch ist. Bei einem bevorzugten Verfahren ist es möglich, unter Bezugnahme auf diesen Vergleichswert die Rückführung des Drucks zu steuern und/oder zu regeln (und ins- besondere die oben erwähnten Startzeitpunkte zu steuern und/oder zu regeln. Auf diese Weise kann eine sehr ressourcenschonende Vorrichtung erreicht werden.

Bei einer weiteren vorteilhaften Ausführungsform weist die Umformungsstation eine Ventilanordnung auf, welche die Beaufschlagung des Kunststoffvorformlings mit dem fließfähigen Medium und/oder die Rückführung des fließfähigen Mediums in wenigstens ein Druckreservoir steuert, wobei die Steuerung bevorzugt wenigstens teilweise unter Berücksichtigung eines Wertes erfolgt, welcher für einen Vergleich zwischen einem Expansionsdruck und einem Recyclingruck charakteristisch ist. Besonders bevorzugt kann diese Vorgehensweise für mehrere und besonders bevorzugt für alle Umformungsstationen stattfinden.

Bevorzugt ist das fließfähige Medium auch von dem zu expandierenden Kunststoffbehältnis in das zweite Druckreservoir rückführbar. Besonders bevorzugt ist das fließfähige Medium von dem zu expandierenden Kunststoffbehältnis in sämtliche Druckreservoirs rückführbar, insbesondere mit Ausnahme desjenigen, welches den höchsten Druck (d.h. insbesondere den Fertigblasdruck) hält.

Bei einer weiteren vorteilhaften Ausführungsform weist die Vorrichtung eine Prozessoreinrichtung auf, welche dazu geeignet und bestimmt ist, eine Startzeit einer Rückführung des fließfähigen Mediums in das X-te-Druckreservoir zu bestimmen und bevorzugt unter Berücksichtigung einer Startzeit für die Beaufschlagung des Kunststoffvorformlings und/oder unter Berücksichtigung einer Gesamtanzahl von Umformungsstation zu berücksichtigen.

Durch die Erfindungen ist es möglich, den Druckluftverbrauch der Vorrichtung zu minimieren. Die Anmelderin konnte ermitteln, dass der Luftverbrauch überraschenderweise maßgeblich von dem Vorblasdruckniveau und dem Flaschenvolumen sowie den Toträumen abhängt. Demgegenüber spielt der Fertigblasdruck (bei mindestens vier Druckstufen) lediglich eine untergeordnete Rolle.

Bei einer weiteren bevorzugten Ausführungsform weist die Vorrichtung eine Steuerungseinrichtung und insbesondere eine Regelungseinrichtung auf, welche die Beaufschlagung der einzelnen Druckreservoirs mit den unterschiedlichen Druckstufen steuert und insbesondere regelt. Hierbei kann es sich beispielsweise um einen sog. Domdruckregler handeln.

Insbesondere weist wenigstens das Druckreservoir, welches den höchsten Druck aufnimmt, insbesondere den Fertigblasdruck, eine derartige Steuerungseinrichtung auf.

Bevorzugt weist die Vorrichtung eine Verteileinrichtung und insbesondere einen Drehverteiler auf, der das fließfähige Medium (insbesondere die Druckluft) ausgehend von einer (insbesondere stationär angeordneten) Druckquelle wie einem Kompressor auf die Druckreservoirs aufteilt.

Bevorzugt ist die erwähnte Steuerungseinrichtung bzw. Regelungseinrichtung zwischen der Verteileinrichtung und wenigstens einem Druckreservoir angeordnet und insbesondere strömungstechnisch mit dem Druckreservoir und der Verteileinrichtung verbindbar.

Daneben kann auch die Komplexität der Vorrichtung für den Maschinenbediener reduziert werden, da die Anzahl an einzustellenden Parametern reduziert wird.

Weiterhin kann eine Druckluftquelle, wie etwa ein Hochdruckkompressor zur Anlagenversorgung auf eine kleinere benötigte Masse dimensioniert werden und es kann weiterhin eine Kostenreduzierung erzielt werden.

Weitere Vorteile und Ausführungsformen ergeben sich aus den beigefügten Zeichnungen. Darin zeigen:

Fig. 1 eine schematische Darstellung einer erfindungsgemäßen Vorrichtung;

Fig. 2 eine Darstellung eines Druckverlaufs bei der Expansion von Kunststoffvorformlingen;

Fig. 3 eine Darstellung zur Veranschaulichung der einzelnen Startzeitpunkte;

Fig. 4 ein vergrößerter Ausschnitt der in Fig. 3 gezeigten Darstellung; und

Fig. 5 eine Darstellung einer Regelung für die einzelnen Druckstufen.

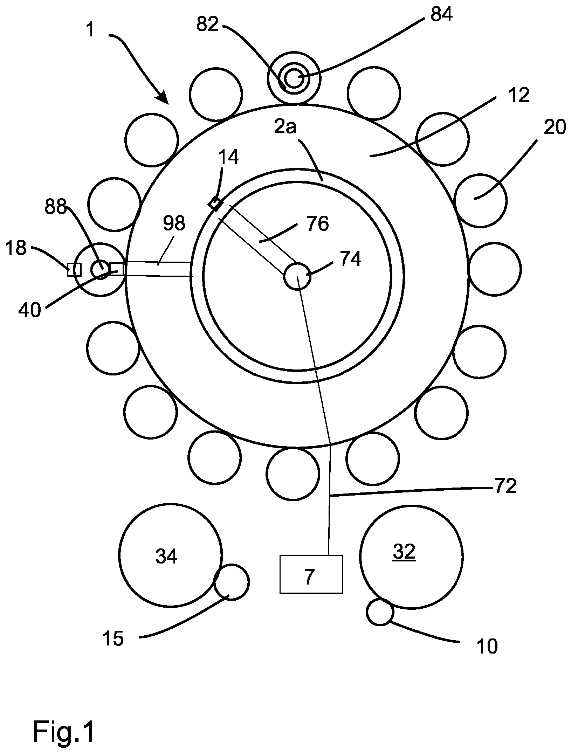

Fig. 1 zeigt eine Vorrichtung 1 zum Umformen von Kunststoffvorformlingen 10 zu Kunststoffbehältnissen 15. Diese Vorrichtung weist einen drehbaren Träger 12 auf, an dem eine Vielzahl von Umformungsstationen 20 angeordnet ist. Diese einzelnen Umformungsstationen weisen jeweils Blasformen 82 auf, sowie Beaufschlagungseinrichtungen 84 zum Beaufschlagen der Kunststoffvorformlinge 10 mit einem fließfähigen Medium, insbesondere Druckluft zum Expandieren der Kunststoffvorformlinge.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82, Beaufschlagungseinrichtungen sowie Reckstangen 88 auf. Bevorzugt liegt die Anzahl dieser Umformungsstationen zwischen 2 und 100, bevorzugt zwischen 4 und 60, bevorzugt zwischen 6 und 40.

Die Kunststoffvorformlinge 10 werden über eine erste Transporteinrichtung 32 wie insbesondere aber nicht ausschließlich einen Transportstern der Vorrichtung zugeführt. Über eine zweite Transporteinrichtung 34 werden die Kunststoffbehältnisse 15 abtransportiert.

Das Bezugszeichen 7 kennzeichnet eine Druckbereitstellungseinrichtung wie etwa einen Kompressor oder auch ein Druckluftanschluss. Die Druckluft wird über eine Verbindungsleitung 72 zu einem Drehverteiler 74 gefördert und von diesem über eine weitere Leitung 76 an das Druckreservoir 2a angegeben, bei dem es sich hier um einen Ringkanal handelt.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Daneben sind bevorzugt auch weitere Verbindungsleitungen vorgesehen, mit denen diese weiteren Druckreservoirs versorgt werden können.

Das Bezugszeichen 98 kennzeichnet eine Verbindungsleitung, welche die Druckluft an eine Umformungsstation 20 abgibt. Bevorzugt ist jeder der Ringkanäle über entsprechende Verbindungsleitungen mit sämtlichen Umformungsstationen verbunden.

Das Bezugszeichen 14 kennzeichnet eine Sensoreinrichtung, welche dazu dient, den Druck innerhalb des Druckreservoirs -bevorzugt kontinuierlich- zu erfassen. Auch die weiteren (nicht gezeigten) Druckreservoirs weisen bevorzugt derartige Sensoreinrichtungen bzw. Druckmesseinrichtungen auf.

Das Bezugszeichen 18 kennzeichnet eine Druckmesseinrichtung, welche dazu geeignet und bestimmt ist, einen Druck des fließfähigen Mediums innerhalb des zu expandierenden Behältnisses zu erfassen.

Das Bezugszeichen 40 kennzeichnet eine Ventilanordnung, wie einen Ventilblock, der dazu dient, die Beaufschlagung der Kunststoffvorformlinge mit dem fließfähigen Medium und bevorzugt auch das Recycling in die einzelnen Druckreservoirs zu steuern. Diese Ventilanordnung kann eine (nicht dargestellte) Prozessoreinrichtung aufweisen, welche die jeweiligen Startzeitpunkte für die Rückführungen des fließfähigen Mediums steuert. Diese Prozessoreinrichtung kann jedoch auch Bestandteil einer (übergeordneten) Maschinensteuerung sein.

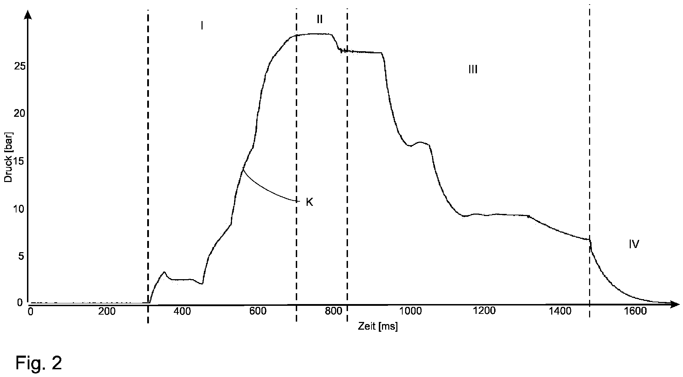

Fig. 2 zeigt eine Darstellung einer Blaskurve K, welche den Druckverlauf bei der Expansion der Kunststoffvorformlinge über die Zeit wiedergibt. Der Abschnitt I kennzeichnet eine Druckaufbauphase und der Abschnitt III eine Recyclingphase (d.h. insbesondere diejenige Phase, bei der Druck wieder von dem Behältnis in die einzelnen Druckreservoirs zurückgeführt wird). Während der Druckaufbauphase wird der Kunststoffvorformling nacheinander mit mehreren Druckniveaus hier insbesondere mit vier Druckniveaus beaufschlagt. Die Phase II kennzeichnet eine Fertigblasphase, während derer der Kunststoffvorformling bereits ausgeformt ist aber durch Beaufschlagung mit einem Fertigblasdruck in diesem Zustand gehalten wird.

Der Abschnitt IV kennzeichnet eine Entlastungsphase in welcher noch verbleibende Druckluft von dem umgeformten Behältnis in die Umgebung entlastet wird.

Im Rahmen des Abschnitts I wird durch entsprechendes Schalten der einzelnen Ventile der Kunststoffvorformling mit ansteigenden Drücken beaufschlagt und so ausgeformt. Nach dem Fertigblasen wird wieder stufenweise Druck aus dem zwischenzeitlich geblasenen Behältnis entlassen.

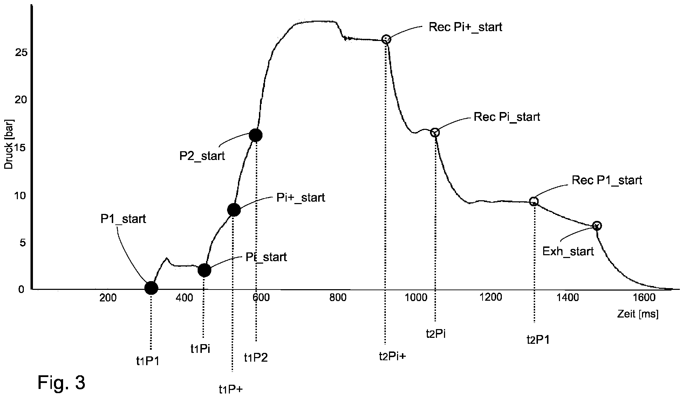

Fig. 3 zeigt eine Darstellung, bei der die jeweiligen Startzeitpunkte für die Beaufschlagung des Kunststoffvorformlings mit den unterschiedlichen Druckniveaus bzw. Drücken dargestellt sind (ausgefüllte Punkte). Daneben sind auch die jeweiligen Startzeitpunkte für die Rückführungen des gasförmigen Mediums in die jeweiligen Druckreservoirs (leere Kreise) dargestellt.

Im internen Stand der Technik werden die ausgefüllten Punkte bzw. deren Startzeitpunkte und auch der letzte Startzeitpunkt (Exh_start) durch den Benutzer eingestellt und die leeren Kreise bzw. die entsprechenden Startzeitpunkte werden von der Vorrichtung selbst bestimmt bzw. berechnet.

Auf der Ordinate ist die Zeit in ms aufgetragen und auf der Koordinate der Druck in bar.

Die vertikalen gepunkteten Linien zeigen jeweils die einzelnen Startzeitpunkte t1 für die Druckbeaufschlagung mit dem jeweiligen Druckniveau bzw. t2 für die Rückführung des jeweiligen Druckniveaus an. Im Rahmen der Erfindung wird insbesondere vorgeschlagen, die Startzeitpunkte für die Rückführungen (t2) zu bestimmen.

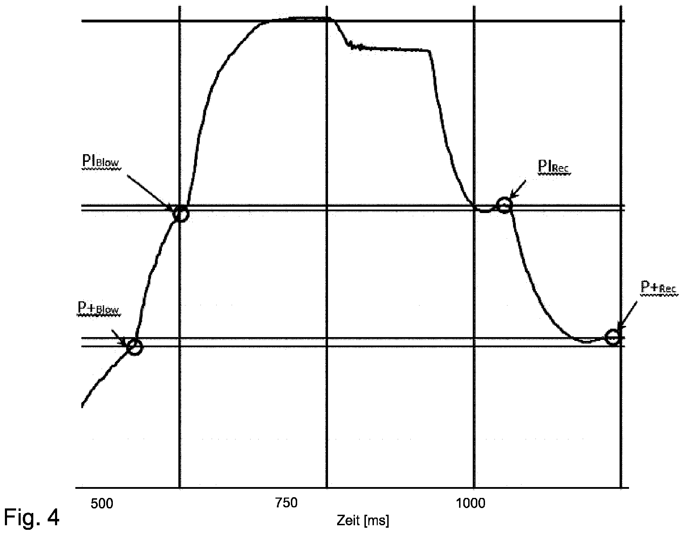

Fig. 4 zeigt eine vergrößerte Darstellung der in Fig. 3 gezeigten Blaskurve und insbesondere die jeweiligen Punkte, die zu den Druckstufen P+ und Pi gehören. Damit ist eine Blaskurve mit charakteristischen Zeitpunkten gezeigt.

Dabei sind auch jeweils durch die horizontalen Linien die jeweils gemessenen Drücke angezeigt. Die Regelung der Startzeitpunkte für die Recyclingphase erfolgt derart, dass sich ein Minimum der Druckdifferenz zwischen den Drücken bei der Beaufschlagung und den Drücken bei der Entlastung ergibt. Wie oben erwähnt, ist dabei bevorzugt die Stellgröße der Regelung die Ventilöffnungszeit der einzelnen Zwischenblasdruckstufen (Pi und P+).

Es werden daher die folgenden Beziehungen bei der Regelung berücksichtigt:

$$Pi\_recycling - Pi\_Druckbeaufschlagung = min$$

und

$$P+\_recycling - P+\_Druckbeaufschlagung = min$$

wobei min für minimal steht.

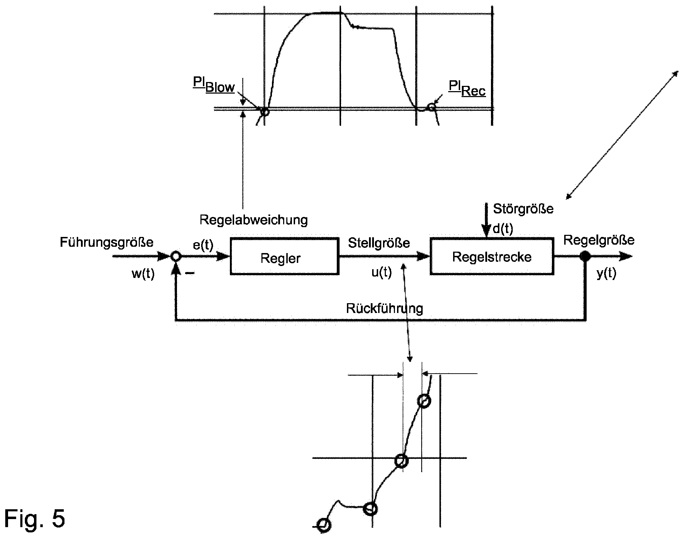

Fig. 5 zeigt eine Darstellung zur Veranschaulichung der Regelung.

Der Regelung wird eine Führungsgröße w(t) vorgegeben, etwa eine gewünschte minimale Druckdifferenz, beispielsweise eine Druckdifferenz von weniger als 0,1bar. Als Stellgrößen werden die Startzeitpunkte der Druckbeaufschlagung und/oder der Rückführung des fließfähigen Mediums verwendet.

Im Rahmen der Regelstrecke können weitere Störgrößen berücksichtigt werden, wie etwa Leckagen, Behältnisplatzer, die Ausleitung von Behältnissen (insbesondere vor dem Blasprozess), gemessene Werte oder ein Verhalten eines Domdruckreglers, eine eventuelle Stationsabschaltung, Eigenschaften von Vorblasflaschen oder auch Blasabbrücke wegen einer Grenzwertverfehlung.

Die Regelung ermittelt die aktuelle bzw. Ist- Abweichung zwischen den obigen Drücken und führt diesen Ist - Wert wieder der Regelung zu. Auf diese Weise können (insbesondere iterativ) die jeweiligen Startzeitpunkte der Rückführung des fließfähigen Mediums bestimmt und/oder angepasst werden

**Patentansprüche**

**1.** Verfahren zum Umformen von Kunststoffvorformlingen (10) zu Kunststoffbehältnissen (15), wobei ein Kunststoffvorformling (10) durch Beaufschlagung mit einem fließfähigen Medium zu dem Kunststoffbehältnis expandiert wird, wobei das fließfähige Medium unter einem ersten Druck in einem ersten Druckreservoir gespeichert wird und unter einem zweiten Druck, der höher ist als der erste Druck in einem zweiten Druckreservoir gespeichert wird und wobei der Kunststoffvorformling über eine Strömungsverbindung zwischen dem ersten Druckreservoir und dem Kunststoffvorformling mit einem ersten Blasdruck beaufschlagt wird und über eine Strömungsverbindung zwischen dem zweiten Druckreservoir und dem Kunststoffvorformling mit dem zweiten Blasdruck beaufschlagt wird und wobei wenigstens zeitweise fließfähiges Medium in das erste Druckreservoir zurückgeführt wird, wenigstens ein Zeitpunkt und/oder Zeitraum für eine Rückführung in das erste Druckreservoir in Abhängigkeit von einem Zeitpunkt und/oder Zeitraum bestimmt wird, der für die Beaufschlagung des Kunststoffvorformlings mit Druck aus einem Druckreservoir charakteristisch ist,
**dadurch gekennzeichnet, dass**

die Startzeit einer Rückführung des fließfähigen Mediums in das x-te Reservoir aufgrund der Gleichung

$$\text{Startzeit Recycling Px} = \text{Startzeit Druckaufbau Px} + n*$$

((3600/Stationsleistung)/Anzahl der Umformungsstationen) - tx, wobei tx eine Konstante ist, ermittelt wird und tx <50ms bevorzugt <40ms und besonders bevorzugt <20 ms ist.

2. Verfahren nach Anspruch 1,
**dadurch gekennzeichnet, dass**
wenigstens ein Zeitpunkt und/oder Zeitraum für eine Rückführung in das erste Druckreservoir in Abhängigkeit von einem Zeitpunkt und/oder Zeitraum bestimmt wird, der für die Beaufschlagung des Kunststoffvorformlings mit Druck aus dem ersten Druckreservoir charakteristisch ist.

3. Verfahren nach wenigstens einem der vorangegangenen Ansprüche,
**dadurch gekennzeichnet, dass**
zur Bestimmung des Zeitpunkts und/oder Zeitraums für die Rückführung in das erste Druckreservoir wenigstens ein Parameter berücksichtigt wird, der für das zu expandierende Behältnis und/oder für eine Zeitdauer der Beaufschlagung mit einem weiteren Druckniveau charakteristisch ist.

4. Verfahren nach wenigstens einem der vorangegangenen Ansprüche,
**dadurch gekennzeichnet, dass**
ein drittes Druckreservoir mit einem dritten Druck vorgesehen ist, wobei der dritte Druck höher als der zweite Druck ist und wenigstens ein Zeitpunkt und/oder Zeitraum für eine Rückführung in das zweite Druckreservoir in Abhängigkeit von einem Zeitpunkt und/oder Zeitraum bestimmt wird, der für die Beaufschlagung des Kunststoffvorformlings mit Druck aus dem zweiten Druckreservoir charakteristisch ist.

5. Verfahren nach wenigstens einem der vorangegangenen Ansprüche,
**dadurch gekennzeichnet, dass**
der Kunststoffvorformling entlang eines vorgegebenen Transportpfads transportiert wird und bevorzugt die Expansion während dieses Transports erfolgt.

6. Verfahren nach wenigstens einem der vorangegangenen Ansprüche,
**dadurch gekennzeichnet, dass**
der Kunststoffvorformling bei seiner Expansion mit wenigstens drei und bevorzugt mit wenigstens vier unterschiedlichen Druckniveaus beaufschlagt wird.

7. Verfahren nach wenigstens einem der vorangegangenen Ansprüche,
**dadurch gekennzeichnet, dass**
zur Bestimmung des Zeitpunkts und/oder Zeitraums für die Rückführung in das erste Druckreservoir wenigstens ein Parameter berücksichtigt wird, der aus einer Gruppe von Parametern ausgewählt ist, welche für eine Anzahl der Umformungsstationen und/oder für eine Leistung der Umformungsstationen charakteristisch sind.

8. Verfahren nach wenigstens einem der vorangegangenen Ansprüche,
**dadurch gekennzeichnet, dass**
die Ventilöffnungszeiten für die Rückführung des fließfähigen Mediums in ein Druckreservoir abhängig sind von Ventilöffnungszeiten für eine Beaufschlagung des Kunststoffvorformlings mit fließfähigem Medium aus diesem Druckreservoir in Abhängigkeiten zu den Ventilöffnungszeiten für die Rückführung des fließfähigen Mediums in dieses Druckreservoir stehen und insbesondere diesen entsprechen.

**9.** Verfahren nach wenigstens einem der vorangegangenen Ansprüche,
**dadurch gekennzeichnet, dass**
zur Regelung wenigstens eine Ventilöffnungszeit verändert wird.

**10.** Vorrichtung (1) zum Umformen von Kunststoffvorformlingen (10) zu Kunststoffbehältnissen (15), mit wenigstens einer Umformungsstation (20) welche eine Beaufschlagungseinrichtung aufweist, welche dazu geeignet und bestimmt ist, einen Kunststoffvorformling (10) durch Beaufschlagung mit einem fließfähigen Medium zu dem Kunststoffbehältnis zu expandieren, mit einem ersten Druckreservoir zur Speicherung des fließfähigen Medium unter einem ersten Druck und einem zweiten Druckreservoir zur Speicherung des fließfähigen Mediums unter einem zweiten Druck, der höher ist als der erste Druck und mit einer ersten Strömungsverbindung zwischen dem ersten Druckreservoir und dem Kunststoffvorformling um den Kunststoffvorformling über diese Strömungsverbindung zwischen dem ersten Druckreservoir und dem Kunststoffvorformling mit einem ersten Blasdruck zu beaufschlagen und mit einer zweiten Strömungsverbindung zwischen dem zweiten Druckreservoir und dem Kunststoffvorformling um den Kunststoffvorformling über diese Strömungsverbindung zwischen dem zweiten Druckreservoir und dem Kunststoffvorformling mit einem zweiten Blasdruck zu beaufschlagen, wobei weiterhin wenigstens zeitweise fließfähiges Medium von den Behältnis in das erste Druckreservoir rückführbar ist, und mit einer Steuerungseinrichtung, welche erste für die Beaufschlagung der Kunststoffvorformlinge (10) mit dem fließfähigen Medium charakteristische Werte ($P1$, $Pi$, $P2$, $t_1P1$, $tPi$, $tP2$) vorgibt, wenigstens ein Zeitpunkt und/oder Zeitraum für eine Rückführung in das erste Druckreservoir in Abhängigkeit von einem Zeitpunkt und/oder Zeitraum bestimmbar ist, der für die Beaufschlagung des Kunststoffvorformlings mit Druck aus einem Druckreservoir charakteristisch ist,
**dadurch gekennzeichnet, dass**

die Startzeit einer Rückführung des fließfähigen Mediums in das x-te Reservoir aufgrund der Gleichung

$$\text{Startzeit Recycling Px} = \text{Startzeit Druckaufbau Px} + n*$$

((3600/Stationsleistung)/Anzahl der Umformungsstationen) - tx, wobei tx eine Konstante ist, ermittelt wird und tx <50ms bevorzugt <40ms und besonders bevorzugt <20 ms ist.

**11.** Vorrichtung (1) nach dem vorangegangenen Anspruch,
**dadurch gekennzeichnet, dass**
die Umformungsstation eine Ventileinrichtung aufweist, welche die Beaufschlagung des Kunststoffvorformlings mit wenigstens drei und bevorzugt mit wenigstens vier unterschiedlichen Druckniveaus ermöglicht.

**12.** Vorrichtung (1) nach wenigstens einem der vorangegangenen Ansprüche 10-11,
**dadurch gekennzeichnet, dass**
das fließfähige Medium auch von dem zu expandierenden Kunststoffbehältnis in das zweite Druckreservoir rückführbar ist.

**13.** Vorrichtung (1) nach wenigstens einem der vorangegangenen Ansprüche 10 - 12, **dadurch gekennzeichnet, dass** die Vorrichtung eine Prozessoreinrichtung aufweist, welche dazu geeignet und bestimmt ist, eine Startzeit einer Rückführung des fließfähigen Mediums in das X-te Reservoir zu bestimmen und bevorzugt unter Berücksichtigung einer Startzeit für die Beaufschlagung des Kunststoffvorformlings und/oder unter Berücksichtigung einer Gesamtanzahl von Umformungsstationen zu bestimmen.

**Claims**

**1.** A method of forming plastic preforms (10) into plastic containers (15), wherein a plastic preform (10) is expanded into the plastic container by exposure to a flowable medium, wherein the flowable medium is stored under a first pressure in a first pressure reservoir and under a second pressure which is higher than the first pressure in a second pressure reservoir, and wherein the plastic preform is acted upon by a first blowing pressure via a flow connection between the first pressure reservoir and the plastic preform and is acted upon by the second blowing pressure via a flow connection between the second pressure reservoir and the plastic preform, and wherein flowable medium is at least temporarily returned to the first pressure reservoir, at least one time and/or period for a return into the first pressure reservoir is determined as a function of a time and/or period which is characteristic for the application of pressure from a pressure reservoir to the plastic preform,
**characterized in that**

the start time of a return of the flowable medium to the x-te reservoir based on the equation

$$\text{start time recycling } Px = \text{Start time pressure build-up } Px + n*$$

((3600/station power)/number of forming stations) - tx, wherein tx is a constant, is determined and tx is <50 ms, preferably <40 ms and particularly preferably <20 ms.

2. The method according to claim 1,
   **characterized in that**
   at least one time and/or period for a return into the first pressure reservoir is determined as a function of a time and/or period which is characteristic for the application of pressure from the first pressure reservoir to the plastic preform.

3. The method according to at least one of the preceding claims,
   **characterized in that**
   for determining the time and/or period for the return to the first pressure reservoir, at least one parameter is taken into account which is characteristic for the container to be expanded and/or for a time period of the application of a further pressure level.

4. The method according to at least one of the preceding claims,
   **characterized in that**
   a third pressure reservoir with a third pressure is provided, wherein the third pressure is higher than the second pressure and at least one time and/or period for a return into the second pressure reservoir is determined in dependence on a time and/or period which is characteristic for the application of pressure from the second pressure reservoir to the plastic preform.

5. The method according to at least one of the preceding claims,
   **characterized in that**
   the plastic preform is transported along a predetermined transport path and preferably the expansion takes place during this transport.

6. The method according to at least one of the preceding claims,
   **characterized in that**
   the plastic preform is subjected to at least three and preferably at least four different pressure levels during its expansion.

7. The method according to at least one of the preceding claims,
   **characterized in that**
   for determining the time and/or period for the return to the first pressure reservoir, at least one parameter is taken into account which is selected from a group of parameters which are characteristic for a number of the forming stations and/or for a power of the forming stations.

8. The method according to at least one of the preceding claims,
   **characterized in that**
   the valve opening times for the return of the flowable medium into a pressure reservoir are dependent on valve opening times for acting upon the plastic preform with flowable medium from this pressure reservoir depending on the valve opening times for the return of the flowable medium into this pressure reservoir and in particular correspond this.

9. The method according to at least one of the preceding claims,
   **characterized in that**
   at least one valve opening time is changed for regulation.

10. An apparatus (1) for forming plastic preforms (10) into plastic containers (15), having at least one forming station (20) which has an application device which is suitable and intended for expanding a plastic preform (10) into the plastic container by application of a flowable medium, having a first pressure reservoir for storing the flowable medium under a first pressure and a second pressure reservoir for storing the flowable medium under a second pressure which is higher than the first pressure and with a first flow connection between the first pressure reservoir and the plastic preform in order to apply a first blowing pressure to the plastic preform via this flow connection between the first pressure reservoir and the plastic preform and with a second flow connection between the second pressure reservoir and the plastic preform in order to apply a second blowing pressure to the plastic preform via this flow connection between the second pressure reservoir and the plastic preform, wherein, furthermore, at least at times flowable medium can be returned from the container into the first pressure reservoir, and having a control device which presets first values ($P1$, $Pi$, $P2$, $t_1P1$, $tPi$, $tP2$) characteristic of the application of the flowable medium on the plastic preforms, at least one point in time and/or time period for a return into the first pressure reservoir can be determined as a function of a point in time and/or time period which is characteristic for the application of pressure from a pressure reservoir to the plastic preform,

**characterized in that**

the start time of a return of the flowable medium to the x-te reservoir based on the equation

$$\text{start time recycling Px} = \text{Start time pressure build-up Px} + n*$$

((3600/station power)/number of forming stations) - tx, wherein tx is a constant, is determined and tx is <50 ms, preferably <40 ms and particularly preferably <20 ms.

11. The apparatus according to the preceding claim,
**characterized in that**
the forming station has a valve device which allows at least three and preferably at least four different pressure levels to be applied to the plastic preform.

12. The apparatus according to at least one of the preceding claims 10-11,
**characterized in that**
the flowable medium can also be returned from the plastic container to be expanded into the second pressure reservoir.

13. The apparatus according to at least one of the preceding claims 10-12,
**characterized in that**
the apparatus has a processor device which is suitable and intended for determining a start time of a return of the flowable medium into the X-te reservoir and preferably taking into account a start time for the application of the plastic preform and/or taking into account a total number of forming stations.

## Revendications

1. Procédé de mise en forme de préformes en matière plastique (10) en récipients en matière plastique (15), dans lequel une préforme en matière plastique (10) est dilatée en le récipient en matière plastique par application d'un milieu fluide, dans lequel le milieu fluide est stocké sous une première pression dans un premier réservoir sous pression et est stocké dans un deuxième réservoir sous pression sous une deuxième pression, qui est supérieure à la première pression, et dans lequel la préforme en matière plastique est soumise à l'action d'une première pression de soufflage par l'intermédiaire d'une liaison fluidique entre le premier réservoir sous pression et la préforme en matière plastique et est soumise à la deuxième pression de soufflage par l'intermédiaire d'une liaison fluidique entre le deuxième réservoir sous pression et la préforme en matière plastique et dans lequel du milieu fluide est au moins temporairement renvoyé dans le premier réservoir sous pression, au moins un moment et/ou une période de retour dans le premier réservoir sous pression sont définis en fonction d'un moment et/ou d'une période qui sont caractéristiques de l'action exercée par une pression provenant d'un réservoir sous pression sur la préforme en matière plastique à partir d'un réservoir sous pression,
**caractérisé en ce que**

l'heure de début d'un retour du milieu fluide dans le x-ième réservoir est déterminée en fonction de l'équation heure de début de recyclage Px = heure de début de montée en pression Px + n*

((3600/puissance de station)/nombre de stations de mise en forme) - tx, dans lequel tx est une constante et tx est <50 ms, de manière préférée est <40 ms et de manière particulièrement préférée est <20 ms.

**2.** Procédé selon la revendication 1,
**caractérisé en ce que**
au moins un moment et/ou une période pour un retour dans le premier réservoir sous pression sont définis en fonction d'un moment et/ou d'une période, qui sont caractéristiques de l'action exercée par une pression provenant du premier réservoir sous pression sur la préforme en matière plastique.

**3.** Procédé selon au moins l'une quelconque des revendications précédentes,
**caractérisé en ce que**
au moins un paramètre, qui est caractéristique du récipient à dilater et/ou d'une durée de l'action exercée avec un autre niveau de pression, est pris en compte pour définir le moment et/ou la période de retour dans le premier réservoir sous pression.

**4.** Procédé selon au moins l'une quelconque des revendications précédentes,
**caractérisé en ce que**
un troisième réservoir sous pression est prévu avec une troisième pression, dans lequel la troisième pression est supérieure à la deuxième pression et au moins un moment et/ou une période de retour dans le deuxième réservoir sous pression sont définis en fonction d'un moment et/ou d'une période, qui sont caractéristiques de l'action exercée par une pression provenant du deuxième réservoir sous pression sur la préforme en matière plastique.

**5.** Procédé selon au moins l'une quelconque des revendications précédentes,
**caractérisé en ce que**
la préforme en matière plastique est transportée le long d'un trajet de transport spécifié et l'expansion a lieu de manière préférée pendant ledit transport.

**6.** Procédé selon au moins l'une quelconque des revendications précédentes,
**caractérisé en ce que**
la préforme en matière plastique est soumise, lors de sa dilatation, à l'action d'au moins trois et de manière préférée d'au moins quatre niveaux de pression différents.

**7.** Procédé selon au moins l'une quelconque des revendications précédentes,
**caractérisé en ce que**
au moins un paramètre, qui est choisi parmi un groupe de paramètres qui sont caractéristiques d'un nombre de stations de mise en forme et/ou d'une performance des stations de mise en forme, est pris en compte pour définir le moment et/ou la période de retour dans le premier réservoir de pression.

**8.** Procédé selon au moins l'une quelconque des revendications précédentes,
**caractérisé en ce que**
les temps d'ouverture des vannes pour le retour du milieu fluide dans un réservoir sous pression dépendent de temps d'ouverture des vannes pour soumettre la préforme en matière plastique à l'action d'un milieu fluide provenant dudit réservoir sous pression en fonction des temps d'ouverture des vannes pour le retour du milieu fluide dans ledit réservoir sous pression et correspondent en particulier à ceux-ci.

**9.** Procédé selon au moins l'une quelconque des revendications précédentes,
**caractérisé en ce que**
au moins un temps d'ouverture de vanne est modifié pour la régulation.

**10.** Dispositif (1) de mise en forme de préformes en matière plastique (10) en récipients en matière plastique (15), avec au moins une station de mise en forme (20), qui présente un système d'application qui est adapté pour et se destine à dilater une préforme en matière plastique (10) en le récipient en matière plastique par application d'un milieu fluide, avec un premier réservoir sous pression pour stocker le milieu fluide sous une première pression et un deuxième réservoir sous pression pour stocker le milieu fluide sous une deuxième pression, qui est supérieure à la première pression, et avec une première liaison fluidique entre le premier réservoir de pression et la préforme en matière plastique pour soumettre la préforme en matière plastique à l'action d'une première pression de soufflage par l'intermédiaire de ladite liaison fluidique entre le premier réservoir sous pression et la préforme en matière plastique et avec une deuxième liaison fluidique entre le deuxième réservoir de pression et la préforme en matière plastique pour soumettre la préforme en matière plastique à l'action d'une deuxième pression de soufflage par l'intermédiaire de ladite liaison fluidique entre le deuxième le réservoir sous pression et la préforme en matière plastique, dans lequel le milieu fluide peut toujours être ramené au moins temporairement du récipient dans le premier réservoir sous pression, et avec un système de commande, lequel spécifie des premières valeurs (P1, Pi, P2, $t_1$P1, tPi, tP2) caractéristiques de l'action exercée par le milieu fluide sur les préformes en matière plastique (10), au moins un moment et/ou une période de retour dans le premier réservoir sous pression peuvent être définis en fonction d'un moment et/ou d'une période, qui sont caractéristiques de l'action exercée par une pression provenant d'un réservoir sous pression sur la préforme en matière plastique,
**caractérisé en ce que**

l'heure de début d'un retour du milieu fluide dans le x-ième réservoir est déterminée en fonction de l'équation heure de début de recyclage Px = heure de début de montée en pression Px + n*

((3600/puissance de station)/nombre de stations de mise en forme) - tx, dans lequel tx est une constante et tx est <50 ms, de manière préférée est <40 ms et de manière particulièrement préférée est <20 ms.

**11.** Dispositif (1) selon la revendication précédente,
**caractérisé en ce que**
la station de mise en forme présente un système de vanne, qui permet de soumettre la préforme en matière plastique à l'action d'au moins trois et de manière préférée d'au moins quatre niveaux de pression différents.

**12.** Dispositif (1) selon au moins l'une quelconque des revendications précédentes 10 et 11,
**caractérisé en ce que**
le milieu fluide peut également être renvoyé du récipient en matière plastique à dilater vers le deuxième réservoir sous pression.

**13.** Dispositif (1) selon au moins l'une quelconque des revendications précédentes 10 à 12 ,
**caractérisé en ce que**
le dispositif présente un système processeur, qui est adapté pour et se destine à définir une heure de début d'un retour du milieu fluide dans le X-ième réservoir et de manière préférée en tenant compte d'une heure de début pour l'action exercée sur la préforme en matière plastique et/ou en tenant compte d'un nombre total de stations de mise en forme.

Fig.1

Fig. 2

Fig. 3

Fig. 4

Fig. 5

**EP 4 335 614 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016136868 A1
- DE 102011110962 A1
- US 2010171243 A1
- US 2004173949 A1